# EUROPÄISCHE PATENTSCHRIFT

(11) **EP 2 531 334 B1**
(45) Veröffentlichungstag und Bekanntmachung des Hinweises auf die Patenterteilung: **11.12.2013**
(21) Anmeldenummer: 10803254.1
(22) Anmeldetag: 30.12.2010
(51) Int. Cl.: B29C 33/10, B29C 45/34

(54) **VORRICHTUNG ZUM HERSTELLEN VON MIT EINER KUNSTSTOFFMASSE UMSPRITZTEN BAUTEILEN UND UMSPRITZTES BAUTEIL**
METHOD FOR PRODUCING COMPONENTS ENCAPSULATED BY A PLASTIC COMPOUND, AND ENCAPSULATED COMPONENT
DISPOSITIF DE FABRICATION D'ÉLÉMENTS PRÉSENTANT UN SURMOULAGE EN MATIÈRE PLASTIQUE ET ÉLÉMENT SURMOULÉ

(30) Priorität: 02.02.2010 DE 102010001473
(43) Veröffentlichungstag der Anmeldung: 12.12.2012
(73) Patentinhaber: Robert Bosch GmbH, 70442 Stuttgart (DE)
(72) Erfinder: GRAUF, Gerhard, 72805 Lichtenstein-Unterhausen (DE); TOUHENT, Hassene, 72762 Reutlingen (DE)
(86) Internationale Anmeldenummer: PCT/EP2010/070909
(87) Internationale Veröffentlichungsnummer: WO 2011/095263

(56) Entgegenhaltungen:
- EP-A1- 0 842 749
- EP-A1- 1 782 935
- WO-A1-02/32513
- DE-A1- 19 833 730
- JP-A- 56 123 811
- US-A- 2 275 591
- US-A- 4 431 047
- US-A- 5 998 243

## Beschreibung

### Stand der Technik

Die Erfindung betrifft eine Vorrichtung zum Herstellen von mit einer Kunststoffmasse umspritzten Bauteilen nach dem Oberbegriff des Anspruchs 1 sowie ein umspritztes Bauteil.

Eine derartige Vorrichtung, ist bereits aus dem Stand der Technik bekannt und dient beispielsweise dazu, elektronische Baugruppen oder Bauteile, wie auf einer Leiterplatte angeordnete Schaltungen, Chips oder ähnliches mit Kunststoff zu umspritzen, um dadurch eine gegenüber Medien bzw. äußere Einflüsse geschützte Anordnung des Bauteils bzw. der Baugruppe zu ermöglichen. Ein derartiges Herstellverfahren wird auch als "Molding-Verfahren" bezeichnet.

Bei den aus dem Stand der Technik bekannten Vorrichtungen sind Entlüftungskanäle vorgesehen, die insbesondere in der Trennebene von Formhälften angeordnet sind und die beim Einspritzen des (zunächst flüssigen) Kunststoffes in das Formwerkzeug den Austritt der von der Kunststoffmasse verdrängten Luft auch dem Formwerkzeug ermöglichen. Nachteilig hierbei ist, dass zum einen die Größe der Entlüftungskanäle nicht beliebig groß gewählt werden kann, da ansonsten der Austritt von Kunststoffmasse aus den Entlüftungskanälen nicht ausgeschlossen werden kann und zum anderen die Anordnung der Entlüftungskanäle in der Trennebene des Formwerkzeuges, je nach Gestalt des Bauteils sowie anderen Parametern, keine optimale Entlüftung des Formwerkzeuges gewährleistet, so dass Lufteinschlüsse in der erstarrten Kunststoffmasse nicht ausgeschlossen sind, was die Qualität bzw. Robustheit des Bauteils negativ beeinflussen kann.

Die EP 1782935 A1 zeigt eine Metallpressform die ein Verschlusselement aufweist, welches sich unter Beihilfe des eingespritzten Kunststoffes schließt. Das Verschlusselement ist dabei über einen ringförmig ausgebildeten Entlüftungskanal mit dem Formwerkzeug verbunden.

### Offenbarung der Erfindung

Ausgehend von dem dargestellten Stand der Technik liegt der Erfindung die Aufgabe zugrunde, eine Vorrichtung zum Herstellen von mit einer Kunststoffmasse umspritzten Bauteilen nach dem Oberbegriff des Anspruchs 1 derart weiterzubilden, dass eine zuverlässige Entlüftung des Formwerkzeuges ermöglicht wird. Diese Aufgabe wird bei einer Vorrichtung zum Herstellen von mit einer Kunststoffmasse umspritzten Bauteilen mit den Merkmalen des Anspruchs 1 gelöst. Der Erfindung liegt dabei die Idee zugrunde, durch die Anordnung eines Verschlusselementes in dem Entlüftungskanal, welches den Austritt von Kunststoffmasse aus dem Entlüftungskanal verhindert, den Entlüftungskanal derart ausbilden zu können, dass dieser einen derartigen Querschnitt aufweist, dass die in dem Formwerkzeug beim Einspritzen der Kunststoffmasse befindliche Luft in jedem Falle sicher aus dem Formwerkzeug entweichen kann, so dass keine Lufteinschlüsse in der ausgehärteten Kunststoffmasse entstehen.

Vorteilhafte Weiterbildungen der erfindungsgemäßen Vorrichtung zum Herstellen von mit einer Kunststoffmasse umspritzten Bauteilen sind in den Unteransprüchen angegeben. In den Rahmen der Erfindung fallen sämtliche Kombinationen aus zumindest zwei von in den Ansprüchen, der Beschreibung und/oder den Figuren offenbarten Merkmalen.

Erfindungsgemäß ist vorgesehen, dass das Verschlusselement als selbstverschließendes Verschlusselement ausgebildet ist. Dadurch wird eine besonders hohe Prozesssicherheit sowie ein relativ geringer vorrichtungstechnischer Aufwand ermöglicht.

Erfindungsgemäß ist vorgesehen, dass sich das Verschlusselement unter Einwirkung der Kunststoffmasse schließt. Dadurch lässt sich ein Austritt von Kunststoffmasse durch den Entlüftungskanal des Verschlusselementes sicher vermeiden.

Erfindungsgemäß ist vorgesehen, dass das Verschlusselement zumindest einen elastisch verformbaren Abschnitt aufweist. Mittels eines derartigen elastischen Abschnitts lässt sich somit der Entlüftungskanal im Verschlusselement verschließen.

Um das Verschlusselement retativ einfach und preiswert herstellen zu können, ist darüber hinaus erfindungsgemäß vorgesehen, dass das Verschlusselement insgesamt aus elastischem Material, insbesondere aus Gummi, ausgebildet ist.

In einer weiteren Ausgestaltung der Erfindung, die einen besonders sicheren Austritt von Luft bzw. Gas aus dem Formwerkzeug ermöglicht, ist es darüber hinaus vorgesehen, dass das Verschlusselement außerhalb der Trennebene der wenigstens zwei Formelemente angeordnet ist. So ist es beispielsweise denkbar, das Verschlusselement in einer Ecke, oder aber an einem dem Eintrittskanal für die Kunststoffmasse gegenüberliegenden Bereich des Formwerkzeugs anzuordnen.

In einer ersten alternativen Ausgestaltung des Verschlusselements ist es denkbar, das Verschlusselement als Einlegeteil für die Formelemente auszubilden. Insbesondere bei preiswert herstellbaren Verschlusselementen sind diese Verschlusselemente dann zum einmaligen Gebrauch vorgesehen. Dadurch, dass diese als Einlegeteil ausgebildet sind, können sie dabei relativ einfach aus dem Formwerkzeug entnommen bzw. in das Formwerkzeug eingelegt werden, wodurch der Handlingsaufwand relativ gering ist.

Alternativ hierzu ist es jedoch auch denkbar, dass das Verschlusselement als Bestandteil des umspritzten Bauteils, insbesondere als Steckerkörper, ausgebildet ist. In diesem Fall ist der Handlingsaufwand beim Umspritzen der Bauteile insofern minimiert, als keine zusätzlichen, separaten Einlegeteile bzw. Verschlusselemente verwendet werden müssen.

Weitere Vorteile, Einzelheiten und Merkmale der Erfindung ergeben sich aus der nachfolgenden Beschreibung bevorzugter Ausführungsbeispiele sowie anhand der Zeichnungen.

Diese zeigen in:
- Fig. 1 und 2: ein vereinfacht dargestelltes Formwerkzeug zum Herstellen von umspritzten Bauteilen im Längsschnitt vor und nach dem Einspritzen von Kunststoffmasse in das Formwerkzeug und
- Fig. 3 und 4: ein gegenüber den Fig. 1 und 2 modifiziertes Formwerkzeug bzw. modifizierte Verschlusselemente vor bzw. nach dem Einspritzen von Kunststoffmasse in das Formwerkzeug.

Gleiche Bauteile bzw. Bauteile mit gleicher Funktion sind in den Figuren mit den selben Bezugsziffern versehen.

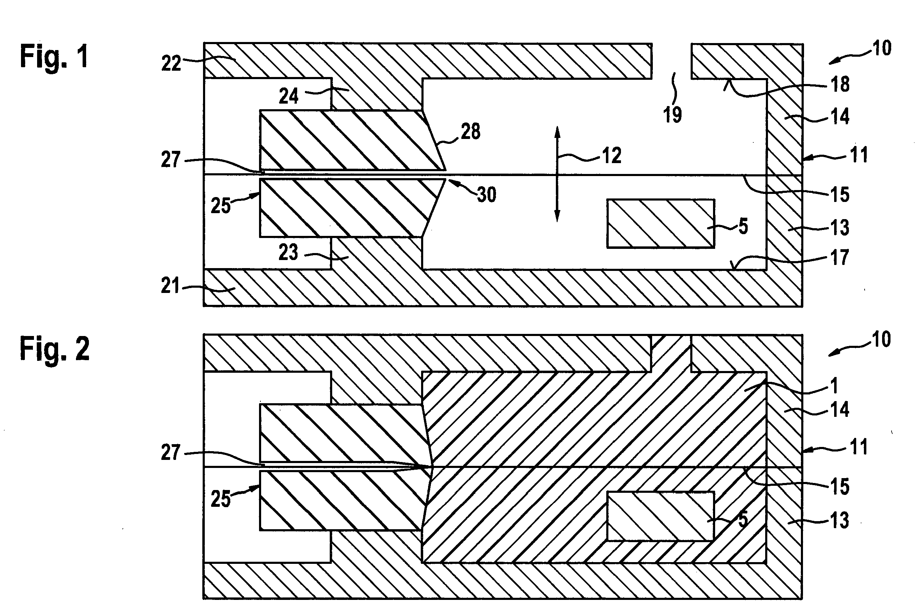

In den Fig. 1 und 2 ist eine erste Vorrichtung 10 zum Herstellen von mit einer Kunststoffmasse 1 umspritzten Bauteilen 5 dargestellt. Ein Verfahren unter Verwendung einer derartigen Vorrichtung 10 wird auch als "Molding-Verfahren" bezeichnet und findet z.B. in der Kraftfahrzeugindustrie Anwendung für Bauteile 5, welche vor dem Einfluss von Medien, wie Säuren; Feuchtigkeit oder ähnlichem geschützt werden müssen. Als Bauteile 5 seien hierbei beispielhaft und nicht einschränkend elektronische Bauteile bzw. Baugruppen wie Chips, Leiterplatten o.ä. genannt. Selbstverständlich sind auch andere Bauteile, auch für andere industrielle Anwendungen, mittels eines derartigen Verfahrens vor äußeren Einflüssen geschützt herstellbar.

Bei der Kunststoffmasse 1 handelt es sich um eine Kunststoffmasse 1, welche im Verarbeitungszustand flüssig bzw. pastös ist, und im Endzustand, nach deren Aushärtung, im festen Zustand vorliegt und dabei das Bauteil 5 zumindest teilweise, vorzugsweise vollständig, umgibt.

Die Vorrichtung 10 weist u.a. ein Formwerkzeug 11 auf, das im dargestellten Ausführungsbeispiel aus zwei, in Richtung des Doppelpfeils 12 bewegbaren Formhälften 13 und 14 besteht. Die untere Formhälfte 13 und die obere Formhälfte 14 weisen auf den einander zugewandten Seiten eine gemeinsame Trennebene 15 auf, an denen die beiden jeweiligen Seiten der Formhälften 13 und 14 dicht aneinander anschließen. Selbstverständlich ist es im Rahmen der Erfindung auch möglich bzw. denkbar, mehr als zwei Formhälften 13 und 14 bzw. Formteile zu verwenden.

In den beiden Formhälften 13 und 14 ist jeweils eine, im Ausführungsbeispiel topfartige Ausnehmung 17, 18 ausgebildet. Die beiden Ausnehmungen 17 und 18 sind für die äußere Form des von der Kunststoffmasse 1 umspritzten Bauteils 5 maßgeblich. Weiterhin weist im Ausführungsbeispiel die obere Formhälfte 14 eine Durchgangsöffnung 19 auf, durch die die flüssige bzw. pastöse Kunststoffmasse bei geschlossenen Formhälften 13 und 14 in das Formwerkzeug 11 eingebracht werden kann. Auch ist es im Rahmen der Erfindung selbstverständlich denkbar, mehr als eine Durchgangsöffnung 19 im Formwerkzeug 11 vorzusehen. Weiterhin ist die Platzierung sowie der Durchmesser der Durchgangsöffnung 19 dem jeweiligen Anwendungsfall anzupassen.

In einer Seitenwand 21 bzw. 22 der beiden Formhälften 13 und 14 ist jeweils ein stegartiger Wandabschnitt 23 und 24 ausgebildet. Die beiden Wandabschnitte 23 und 24 wirken mit einem Verschlusselement 25 zusammen. Das Verschlusselement 25 ist vorzugsweise insgesamt gesehen aus einem elastischen Material, insbesondere aus gummielastischem Material, ausgebildet und weist mittig, d.h. in der Ebene der Trennebene 15 des Formwerkzeugs 11 einen Entlüftungskanal 27 auf. Der Entlüftungskanal 27 verbindet den von den Ausnehmungen 17 und 18 der Formhälften 13 und 14 umschlossenen Innenraum des Formwerkzeugs 11 mit der Umgebung. Die Querschnittsform des Entlüftungskanals 27 kann prinzipiell unterschiedliche Formen aufweisen, im einfachsten Fall ist sie rund ausgebildet.

Das Verschlusselement 25 ist bei dem dargestellten Ausführungsbeispiel gemäß den Fig. 1 und 2 als Einlegeteil ausgebildet, d.h., dass nach der Herstellung eines von der Kunststoffmasse 1 umschlossenen Bauteils 5 das Verschlusselement 25 aus dem Formwerkzeug 11 entnommen wird und zur Herstellung eines neuen Bauteils 5 ein neues Verschlusselement 25 in das Formwerkzeug 11 eingelegt wird.

In dem in der Fig. 1 dargestellten Ausführungsbeispiel weist das Verschlusselement 25 eine zylindrische bzw. hülsenförmige Form auf. Hierbei ragt in die Ausnehmungen 17 und 18 der Formhälften 13 und 14 ein Abschnitt 28 des Verschlusselements 25 hinein, der kegelförmig ausgebildet ist. Die Spitze 30 des Abschnitts 28 fällt mit der Achse des Entlüftungskanals 27 zusammen. In der Fig. 1 ist der Zustand dargestellt, bei der die Formhälften 13 und 14 gegeneinander verfahren sind, d.h. ein geschlossenes Formwerkzeug 11 ausbilden. Das Bauteil 5 ist bereits innerhalb des Formwerkzeugs 11 angeordnet, jedoch ist noch keine Kunststoffmasse 1 in das Formwerkzeug 11 eingespritzt. Man erkennt, dass in diesem Zustand der Entlüftungskanal 27 geöffnet ist.

Wird nun Kunststoffmasse 1 über die Durchgangsöffnung 19 der oberen Formhälfte 14 in das Formwerkzeug 11 eingespritzt bzw. eindosiert, so kann die in dem (geschlossenen) Formwerkzeug 11 befindliche Luft (bzw. befindliches Gas) zunächst vollständig durch den Entlüftungskanal 27 des Verschlusselements 25 in das Äußere gelangen bzw. in die Umgebung verdrängt werden. Sobald eine bestimmte Menge Kunststoffmasse 1 mit dem kegelförmigen Abschnitt 28 des Verschlusselements 25 zusammenwirkt wird der Entlüftungskanal 27 in Folge der Form des Abschnitts 28 auf der den Ausnehmungen 17 und 18 zugewandten Seite aufgrund des verformbar ausgebildeten Abschnitts 28 verschlossen. Dieser Zustand ist in der Fig. 2 dargestellt. In dem Endzustand, bei dem das Formwerkzeug 11 bzw. die Ausnehmungen 17 und 18 vollständig mit Kunststoffmasse 1 ausgefüllt sind ist somit der Entlüftungskanal 27 verschlossen und es wird ein Austritt von Kunststoffmasse 1 durch den Entlüftungskanal 27 verhindert.

Nach dem Aushärten der Kunststoffmasse 1 werden die beiden Formhälften 13 und 14 voneinander beabstandet bzw. getrennt, so dass das umspritzte Bauteil 5 entnommen werden kann. Gleichzeitig kann das Verschlusselement 25 aus dem Formwerkzeug 11 entnommen bzw. vom Bauteil 5 entfernt werden.

In dem in den Fig. 1 und 2 dargestellten Ausführungsbeispiel ist das Verschlusselement 25 in der Trennebene 15 des Formwerkzeugs 11 angeordnet. Es liegt selbstverständlich im Rahmen der Erfindung, die Anordnung des Verschlusselements 25 nicht nur in der Trennebene 15 des Formwerkzeugs 11 vorzusehen, sondern an jedem anderen Ort der Vorrichtung 10 bzw. des Formwerkzeugs 11, insbesondere in Ecken oder schwierig zugänglichen Stellen des Formwerkzeugs 11, an denen ansonsten der Austritt von Luft oder Gas aus dem Formwerkzeug 11 infolge eindringender Kunststoffmasse 1 erschwert ist. Insbesondere ist es auch denkbar, mehrere, gegebenenfalls unterschiedlich geformte bzw. dimensionierte Verschlusselemente 25 an der Vorrichtung 10 bzw. in dem Formwerkzeug 11 vorzusehen.

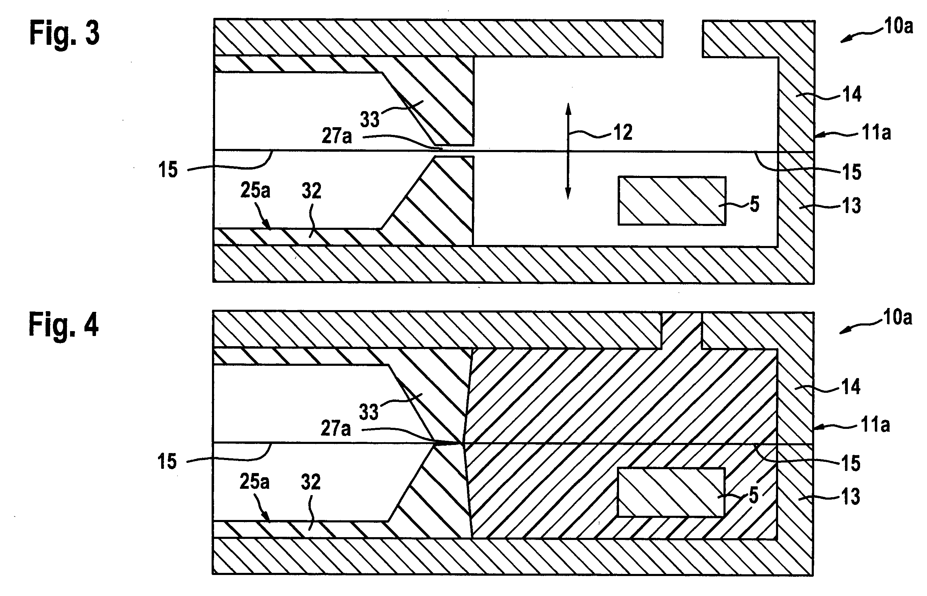

In den Fig. 3 und 4 ist eine zweite erfindungsgemäße Vorrichtung 10a dargestellt. Die Vorrichtung 10a weist ein Verschlusselement 25a auf, das eine topfförmige Form aufweist. Hierbei weist das Verschlusselement 25a eine umlaufende Wand 32 auf, an die sich ein Bodenabschnitt 33 anschließt. Der Bodenabschnitt 33 ist auf der der Wand 32 zugewandten Seite beispielhaft kegelförmig ausgebildet und weist mittig ein Entlüftungskanal 27a auf. Der Entlüftungskanal 27a ist z.B. rund oder auch mehreckig ausgebildet. Wenn der Querschnitt des Verschlusselements 25a zum Beispiel rechteckförmig ausgebildet ist, so kann auf die stegartigen Wandabschnitte 23, 24 beim Formwerkzeug 11 a verzichtet werden, so dass der Bodenabschnitt 33 eine Seitenwand des umspritzten Bauteils 5 ausbildet. Ebenso ist es selbstverständlich möglich, das Verschlusselement 25a zum Beispiel als zylindrischen Körper und als Einlegeteil entsprechend dem Verschlusselement 25 auszubilden.

Bei dem in der Fig. 4 dargestellten Zustand, bei der Kunststoffmasse 1 in das Formwerkzeug 11a eingegeben wurde, verschließt die Kunststoffmasse 1 den Entlüftungskanal 27a des Bodenabschnitts 33 dadurch, dass der Bodenabschnitt 33 von der Kunststoffmasse 1 nach außen gedrückt wird und dabei den Entlüftungskanal 27a verschließt. Wesentlich hierbei ist, dass der Bodenabschnitt 33 eine elastische Verformung zulässt, d.h., dass zumindest der Bodenabschnitt 33 im Bereich des Entlüftungskanal 27a, vorzugsweise jedoch das gesamte Verschlusselement 25a, aus elastischem Material besteht.

Die soweit beschriebenen Vorrichtungen 10 und 10a können in vielfältiger Art und Weise abgewandelt bzw. modifiziert werden, ohne vom Erfindungsgedanken abzuweichen. Dieser besteht darin, ein Verschlusselement 25, 25a vorzusehen, welches eine gezielte Entlüftung der Vorrichtung 10, 10a beim Einspritzen von Kunststoffmasse 1 in die Vorrichtung 10, 10a ermöglicht und gleichzeitig einen Verschluss gewährleistet, so dass Kunststoffmasse 1 nicht aus der Vorrichtung 10, 10a austreten kann.

Eine mögliche Modifikation kann zum Beispiel darin bestehen, dass das Verschlusselement 25, 25a Bestandteil des Bauteils 5 ist, beispielsweise ein Steckerkörper, der eine elektrische Kontaktierung (über ein Kabel) mit dem Bauteil 5 ermöglicht. In diesem Fall ist zumindest ein Abschnitt des Steckerkörpers elastisch ausgebildet und mit einer Durchtrittsöffnung für Luft ausgestattet. Eine weitere denkbare Variante besteht darin, das Verschlusselement 25, 25a nicht als Einlegeteil (und somit ggf. nur zur Verwendung für eine bestimmte Anzahl von Bauteilen 5) vorzusehen, sondern als Bestandteil der Vorrichtung 10, 10a bzw. des Formwerkzeugs 11, 11a.

## Patentansprüche

1. Vorrichtung (10; 10a) zum Herstellen von mit einer Kunststoffmasse (1) umspritzten Bauteilen (5), mit einem Formwerkzeug (11; 11 a), das wenigstens zwei Formelemente (13, 14) aufweist, die in einer Trennebene (15) miteinander zusammenwirken, wobei in den beiden Formelementen (13, 14) eine Ausnehmung (17, 18) zum Ausbilden der äußeren Form des von der Kunststoffmasse (1) umspritzten Bauteils (5) ausgebildet ist, wobei in wenigstens einem der Formelemente (13, 14) ein Entlüftungskanal (27; 27a) ausgebildet ist, durch den beim Einbringen der Kunststoffmasse (1) in das Formwerkzeug (11; 11a) im Formwerkzeug (11; 11a) befindliche Luft oder Gas entweichen kann, wobei der Entlüftungskanal (27; 27a) Bestandteil eines Verschlusselements (25; 25a) ist, das den Austritt von Kunststoffmasse (1) aus dem Entlüftungskanal (27; 27a) verhindert, wobei das Verschlusselement (25; 25a) als selbstverschließendes Verschlusselement (25; 25a) ausgebildet ist, und wobei das Verschlusselement (25; 25a) zumindest einen elastisch verformbaren Abschnitt (28; 33) aufweist,
**dadurch gekennzeichnet,**
**dass** das Verschlusselement (25; 25a) einen den Entlüftungskanal (27; 27a) ausbildenden Durchgang aufweist, der unter der Einwirkung der Kunststoffmasse (1) schließt, dass das Verschlusselement (25; 25a) insgesamt aus elastischem Material, insbesondere aus Gummi, ausgebildet ist, und dass das Verschlusselement (25; 25a), von dem wenigstens einen elastisch verformbaren Abschnitt (28; 33) verschließbar ist

2. Vorrichtung nach Anspruch 1,
**dadurch gekennzeichnet,**
**dass** das Verschlusselement (25; 25a) außerhalb der Trennebene (15) der wenigstens zwei Formelemente (13, 14) angeordnet ist.

3. Vorrichtung nach Anspruch 1 oder 2,
**dadurch gekennzeichnet,**
**dass** das Verschlusselement (25; 25a) als Einlegeteil für die wenigstens zwei Formelemente (13, 14) ausgebildet ist.

4. Vorrichtung nach einem der Ansprüche 1 bis 3,
**dadurch gekennzeichnet,**
**dass** das Verschlusselement (25; 25a) als Bestandteil des umspritzten Bauteils (5), insbesondere als Steckerkörper, ausgebildet ist.

## Claims

1. Device (10; 10a) for producing components (5) encapsulated by a plastics compound (1), comprising a moulding tool (11; 11a), which has at least two moulding elements (13, 14) that interact with one another in a parting plane (15), wherein an impression (17, 18) for forming the outer shape of the component (5) encapsulated by the plastics compound (1) is formed in the two moulding elements (13, 14), wherein a venting channel (27; 27a) through which air or gas located in the moulding tool (11; 11a) can escape when the plastics compound (1) is introduced into the moulding tool (11; 11a) is formed in at least one of the moulding elements (13, 14), wherein the venting channel (27; 27a) constitutes part of a closure element (25; 25a), which prevents plastics compound (1) from escaping from the venting channel (27; 27a), wherein the closure element (25; 25a) is formed as a self-closing closure element (25; 25a), and wherein the closure element (25; 25a) has at least one elastically deformable portion (28; 33),
**characterized**
**in that** the closure element (25; 25a) has a passage forming the venting channel (27; 27a), which closes under the effect of the plastics compound (1), in that the closure element (25; 25a) is formed entirely from an elastic material, in particular from rubber, and in that the closure element (25; 25a) can be closed by the at least one elastically deformable portion (28; 33).

2. Device according to Claim 1, **characterized in that** the closure element (25; 25a) is arranged outside the parting plane (15) of the at least two moulding elements (13, 14).

3. Device according to Claim 1 or 2, **characterized in that** the closure element (25; 25a) is formed as an insert for the at least two moulding elements (13, 14).

4. Device according to one of Claims 1 to 3, **characterized in that** the closure element (25; 25a) is formed as a constituent part of the encapsulated component (5), in particular as the body of a connector.

## Revendications

1. Dispositif (10; 10a) de fabrication de composants (5) englobés dans une pâte (1) en matière synthétique injectée, le dispositif présentant
un outil de moulage (11; 11a) doté d'au moins deux éléments de moulage (13, 14) qui coopèrent l'un avec l'autre dans un plan de séparation (15),
une découpe (17, 18) destinée à former la forme extérieure du composant (5) englobé dans la pâte (1) en matière synthétique étant formée dans les deux éléments de moule (13, 14),
un canal d'évent (27; 27a) par lequel l'air ou le gaz présent dans l'outil de moulage (11; 11a) peut s'échapper lors de l'apport de la pâte (1) de matière synthétique dans l'outil de moulage (11; 11a) étant formé dans au moins l'un des éléments de moulage (13, 14),
le canal d'évent (27; 27a) faisant partie d'un élément de fermeture (25; 25a) qui empêche que la pâte (1) de matière synthétique sorte par le canal d'évent (27; 27a),
l'élément de fermeture (25; 25a) étant configuré comme élément de fermeture (25; 25a) à auto-fermeture et
l'élément de fermeture (25; 25a) présentant au moins une partie (28; 33) élastiquement déformable, **caractérisé en ce que**
l'élément de fermeture (25; 25a) présente un passage qui forme le canal d'évent (27; 27a) et qui se ferme sous l'action de la pâte (1) en matière synthétique,
**en ce que** l'élément de fermeture (25; 25a) est globalement formé en un matériau élastique et en particulier en caoutchouc et
**en ce que** l'élément de fermeture (25; 25a) peut être fermé par la ou les parties (28; 33) élastiquement déformables.

2. Dispositif selon la revendication 1, **caractérisé en ce que** l'élément de fermeture (25; 25a) est disposé à l'extérieur du plan de séparation (15) des deux ou plusieurs éléments de moule (13, 14).

3. Dispositif selon les revendications 1 ou 2, **caractérisé en ce que** l'élément de fermeture (25; 25a) est configuré comme pièce d'insertion prévue pour les deux ou plusieurs éléments de moule (13, 14).

4. Dispositif selon l'une des revendications 1 à 3, **caractérisé en ce que** l'élément de fermeture (25; 25a) est configuré comme partie du composant (5) englobé par injection et en particulier comme corps de fiche.
